# EUROPÄISCHE PATENTANMELDUNG

(11) **EP 2 484 608 A1**
(43) Veröffentlichungstag der Anmeldung: **08.08.2012**
(21) Anmeldenummer: 12154248.4
(22) Anmeldetag: 07.02.2012
(51) Int. Cl.: B65G 1/137

(54) **Vorsatzrahmen für Kommissionierwagen**

(30) Priorität: 07.02.2011 DE 102011000532; 24.06.2011 DE 102011051330
(71) Anmelder: LUCA GmbH Versand & Logistiksysteme, 33790 Halle/Westf. (DE)
(72) Erfinder: Skarbecki, Slawomir, 33790 Halle/Westf. (DE)
(74) Vertreter: Lohr, Georg

(57) **Zusammenfassung**

Ein Andockwagen (20) mit mindestens einer elektronischen Komponente eines Leitsystems zur Unterstützung der Warenkommissionierung und Befestigungsmittel zum Kuppeln und anschließendem Entkuppeln des Andockwagens (20) mit bzw. von einem Kommissionierwagen (100), kann besonders einfach mit dem Kommissionierwagen (100) gekuppelt werden, wenn die Höhe der Befestigungsmittel derart gewählt ist, dass zum Kuppeln und Entkuppeln des Andockwagens (20) eine horizontale Bewegung des Andockwagens (20) relativ zum Kommissionierwagen (100) und ggf. die Betätigung einer Ver- bzw. Entriegelung genügt.

## Beschreibung

### Technisches Gebiet

Die Erfindung betrifft einen Andockwagen mit mindestens einer elektronischen Komponente eines Leitsystems zur Unterstützung der Warenkommissionierung und mit mindestens einem Befestigungsmittel zum Kuppeln und anschließendem Entkuppeln des Andockwagens mit bzw. von einem Kommissionierwagen.

### Stand der Technik

Beim Zusammenstellen von Waren, was auch als Kommissionieren bezeichnet wird, werden die Waren oft in Regallagern zusammengesucht. Dazu werden Kommissionierwägen verwendet, die meist mehrere Abteile für Waren aufweisen. Der Kommissionierwagen wird in der Regel von einem Kommissionierer durch das Lager gefahren, wobei dann aus dem Lager Waren entnommen und in Abteile des Kommissionierwagens abgelegt werden. Um den Kommissionierer zu unterstützen, werden oft computergesteuerte Leitsysteme eingesetzt, die im Idealfall einem Kommissionierer Ansagen und/oder Anzeigen aus welchem Lagerfach er welche Anzahl welcher Ware entnehmen muss und in welches Abteil des Kommissionierwagens er die zuvor entnommenen Waren ablegen muss. In gleicher Weise kann eine Entnahme von Waren von dem Kommissionierwagen erfolgen. Der Begriff Abteil wird hier allgemein als Lagerort auf einem Kommissionierwagen verwendet, z.B. für Ablageflächen oder Wannen auf einem Boden oder Zwischenboden des Kommissionierwagens. Vorzugsweise wird jede Entnahme und jedes Ablegen von dem Leitsystem erfasst, sei es über eine Zugriffs-überwachung der Lagerfächer bzw. Abteile oder z.B. über eine Quittierung von Handlungen über Taster durch den Kommissionierer. Das ermöglicht dem Leitsystem einem Kommissionierer immer die nächste vorzunehmende Handlung mitzuteilen. Solche Systeme verkürzen die zum Kommissionieren von gegebenen Waren benötigte Zeit und reduzieren die dabei auftretenden Fehler.

In ein solches Leitsystem integrierte Kommissionierwägen sind deutlich teurer als klassische Kommissionierwägen, die nicht in ein computergesteuertes Leitsystem integriert sind. Deshalb wird in der deutschen Patentschrift DE 10 2005 033 567 B3 vorgeschlagen einen Träger mit Ablagen für Komponenten eines Leitsystems an einen der klassischen Kommissionierwägen einzuhängen. Dadurch kann ein Kommissionierwagen durch das Leitsystem unterstützt beladen und an einem Entladeort, z.B. am Montageort der Waren, abgestellt werden. Anschließend wird der Träger ausgehängt und an einen leeren Kommissionierwagen angehängt, welcher dann ebenso durch das Leitsystem unterstützt beladen wird.

### Darstellung der Erfindung

Die Erfindung beruht auf der Beobachtung, dass der Träger nach dem Stand der Technik nur schwer zu handhaben ist, weil das Gewicht, welches beim Ein- und Aushängen angehoben werden muss sehr hoch ist. Zudem besteht die Gefahr, dass die auf Ablagen des Trägers gestellten Komponenten des Leitsystems beim Ein- oder Aushängen von den Ablagen rutschen und auf den Boden fallen, wodurch Sie beschädigt würden.

Der Erfindung liegt die Aufgabe zugrunde, eine Möglichkeit zu schaffen elektronische Bauteile, wie beispielsweise Komponenten eines Leitsystems einfach handhabbar und flexibel mit einem Kommissionierwagen zu koppeln, um die Kommissionierung mit einem Kommissionierwagen durch das Leitsystem zu unterstützen.

Diese Aufgabe wird durch einen Andockwagen nach Anspruch 1 gelöst. Vorteilhafte Ausgestaltungen der Erfindung sind in den Unteransprüchen angegeben. Der Andockwagen weist mindestens eine Komponente eines Leitsystems zur Unterstützung der Warenkommissionierung auf. Insbesondere kann die Komponente ein mit einer zentralen Steuerung des Leitsystems kommunizierendes Anzeigemittel sein. Zudem hat der Andockwagen mindestens ein Befestigungsmittel zum Kuppeln und anschließendem Entkuppeln des Andockwagens an bzw. von einem Kommissionierwagen. Die Befestigungsmittel sind derart an dem Andockwagen angebracht, dass der Andockwagen lediglich an den Kommissionierwagen herangeschoben werden muss, um ihn mit dem Befestigungsmittel an dem Kommissionierwagen zu anzukuppeln. Somit entfällt das nach dem Stand der Technik notwendige Anheben eines Trägers, um ihn an einen Kommissionierwagen anzuhängen. Dies wird dadurch erreicht, dass die Höhe der Befestigungsmittel derart gewählt ist, dass zum Kuppeln und Entkuppeln des Andockwagens eine horizontale Bewegung des Andockwagens relativ zum Kommissionierwagen und ggf. die Betätigung einer Ver- bzw. Entriegelung genügt. Selbstverständlich sollte die Verbindung verriegelt werden. Bevorzugt erfolgt das Verriegeln automatisch beim Zusammenschieben von Andock- und Kommissionierwagen. Das fällt hier unter den Begriff Ankuppeln. Zum Abkuppeln müssen der Andockwagen und der Kommissionierwagen nach dem Lösen einer Verriegelung lediglich horizontal auseinandergezogen werden. Das Entriegeln, also das Lösen der Befestigungsmittel fällt unter den Begriff Abkuppeln.

Das Befestigungsmittel weist bevorzugt mindestens einen schaltbaren Haltemagneten auf. Solch ein schaltbarer Haltemagnet kann insbesondere einen Permanentmagneten aufweisen in dessen Nähe mindestens eine Spule derart angeordnet ist, dass das vom Stromfluss durch die Spule erzeugte Feld dem Feld des Permanentmagneten entgegen gerichtet ist, so dass durch Aktivierung der Spule die Haltekraft des Permanentmagneten reduziert wird, weil zumindest ein Teil seines Feldes durch das Magnetfeld der Spule kompensiert wird. Natürlich ist die Stromrichtung entsprechend zu wählen. Solch ein Haltemagnet kann als Befestigungselement insbesondere an dem Andockwagen angeordnet sein. Wenn der Kommissionierwagen, wie meist aus Stahl ist, genügt es den Andockwagen bei ausgeschalteter Spule an den Kommissionierwagen heranzufahren bis der Haltemagnet an einem ferro- oder paramagnetischen Teil des Kommisionierwagens anliegt. Durch die Haltekraft des Magneten sind der Andockwagen und der Kommissionierwagen gekuppelt und in diesem Sinne verriegelt. Wenn der Kommissionierwagen keine zum Ansetzen eines Haltemagneten geeigneten Materialen aufweist, z.B. weil er einen Aluminiumrahmen hat, dann kann man einfach an den entsprechenden Stellen kleine para- oder ferromagnetische Platten, z.B Eisenplatten anbringen.

Zum Abkuppeln genügt es eine Spannung an die Spule anzulegen, so dass durch diese ein elektrischer Strom fließt, der ein dem Magnetfeld des Permanentmagneten entgegen gerichtetes Magnetfeld erzeugt. Die Stromstärke ist bevorzugt so zu wählen, dass das Magnetfeld des Permanentmagneten zumindest in etwa kompensiert wird. Nun kann der Andockwagen mit geringem Kraftaufwand von dem Kommissionierwagen getrennt, also abgekuppelt werden. Nachdem Andockwagen und Kommissionierwagen von einander soweit entfernt sind, dass sie beim Abschalten der Stromversorgung nicht mehr aufeinander zu rollen, kann die Stromversorgung abgeschaltet werden, d.h. die Befestigungsmittel benötigen nur zum Abkuppeln Energie. Bevorzugt hat der der Kommissionierwagen eine Feststellbremse, die von dem Magnetfeld des Permanentmagneten deaktiviert wird. Wird also der Andockwagen abgekuppelt, wird gleichzeitig die Feststellbremse aktiviert, und kann nicht mehr unkontrolliert umherrollen. Auch das Auseinanderziehen von Andockwagen und Kommissionierwagen wird vereinfacht. Sobald ein Andockwagen angekuppelt wird, wird die Feststellbremse durch das Magnetfeld des Permanentmagneten deaktiviert und der Andockwagen kann einfach verschoben werden.

Bevorzugt ist der Permanentmagnet ein Stabmagnet der in einer Spule angeordnet ist. Der Permanentmagnet und die Spule sitzen in einem topfartigen para-oder ferromagnetischen Anker. Ein erster Pol des Permanentmagneten liegt bevorzugt am Boden des topfartigen Ankers an. Der Topfrand des Ankers liegt mit dem anderen Pol des Magneten in einer Ebene. Wenn der Andockwagen mit solch einem Haltemagneten an einen Kommissionierwagen gekuppelt ist, dann fließt der magnetische Fluss von dem ersten Pol durch den Anker zu dem Kommissionierwagen, und durch diesen zum dem anderen Pol, wenn der der erste Pol der Nordpol des Permanentmagneten ist. Wenn der erste Pol der Südpol ist, dann dreht sich nur die Richtung der Flußlinien um. Natürlich kann zwischen dem anderen Pol und dem Kommissionierwagen ein weiterer Anker angeordnet sein, der mit dem Topfrand des ersten Ankers bündig abschließt. Die Wirkungsweise bleibt im Wesentlichen unverändert.

Bevorzugt weist der Andockwagen mindestens drei Rollen auf. Mit den mindestens drei Rollen kann der Andockwagen statisch stabil an den Kommissionierwagen heran - oder weggeschoben werden. Eine Unterstützung des Andockwagens durch die Muskelkraft eines Kommissionierers beim An- oder Abkuppeln entfällt. Gleiches gilt für den Transport des Andockwagens von einem Kommissionierwagen zu einem anderen Kommissionierwagen oder zu einer Ladestation für Akkumulatoren zur Versorgung von Komponenten des Leitsystems.

Besonders bevorzugt sind die Rollen des Andockwagen frei schwenkbar. Meist haben Kommisionierwägen mindestens eine starre Rolle. Die Ausrichtung dieser Rolle bestimmt die Vorwärtsrichtung und die Drehachse des Kommissionierwagens, d.h. die Vertikale Achse um welche der Kommissionierwagen beim Lenken geschwenkt wird. Bei einigen Kommissionierwägen sitzt diese Rolle in etwa mittig unter dem Boden des Kommissionierwagens, wobei an den Ecken des Kommissionierwagens je eine weitere schwenkbare Rolle angebracht ist. Dann schwenkt der Kommissionierwagen beim Lenken um eine Drehachse die durch die Aufstandsfläche der starren Rolle verläuft. Andere Kommissionierwägen haben vorne zwei starre Rollen und hinten zwei schwenkbare Rollen oder umgekehrt. Dann schneidet die Drehachse, die gemeinsame Achse der starren Rollen. Wenn nun alle Rollen des Andockwagens frei schwenkbar sind, dann beeinflusst ein angekuppelter Andockwagen das Lenkverhalten des Kommissionierwagens nicht, weil die Drehachse des Kommissionierwagens erhalten bleibt.

Besonders bevorzugt hat der Andockwagen eine Aussparung zur Aufnahme des Kommissionierwagens. Die Aussparung kann insbesondere der zwischen den Schenkeln einer Bodengruppe in der Form eines liegenden "L" oder "U" aufgespannte Raum sein. Dadurch ist die Einheit "Andockwagen mit angekuppeltem Kommissionierwagen" besonders kompakt und kann einfach auch durch enge Regalgassen bewegt werden. Zudem können dann die Schenkel der Bodengruppe ggf. über Zwischenstücke, an der Bodengruppe des Kommissionierwagens anliegen, wodurch Schiebe- und/oder Lenkkräfte von dem Andockwagen einfach und zuverlässig auf den Kommissionierwagen übertragen werden können.

Bevorzugt hat der Andockwagen mindestens einen aufrechten Rahmen, der bei angekuppeltem Andockwagen vor einer Zugriffsseite des Kommissionierwagens angeordnet ist. Eine Zugriffsseite des Kommissionierwagens ist die Seite, welche zum Zugriff auf die Abteile vorgesehen ist. Oft ist eine der Längsseiten, bei einigen Modellen beide Längsseiten Zugriffsseite des Kommissionierwagens. Der mindestens eine Rahmen vor der mindestens einen Zugriffsseite kann als Träger für mindestens ein Signalmittel und/oder mindestens einen Sensor dienen. Ein Zugriff auf die Abteile des Kommissionierwagens erfolgt dann durch den Rahmen, der durch mindestens eine horizontale Quertraverse und/oder mindestens eine vertikale Strebe in Segmente unterteilt sein kann. Bevorzugt hat der Rahmen für jedes Abteil ein oder zumindest für je eine Gruppe von Abteilen ein Segment. Dann können an den Quertraversen und/oder Streben den Abteilen bzw. Gruppen zugeordnete Anzeigemittel und/oder Sensoren angeordnet sein. Das Leitsystem kann dann Weisungen für ein Abteil oder eine Gruppe über an den Segmenten angebrachte Signalmittel anzeigen und über entsprechend angeordnete Sensoren überwachen. Das Risiko von Fehlablagen oder Fehlentnahmen in bzw. aus den Abteilen des Kommissionierwagens wird dadurch reduziert.

Besonders bevorzugt ist in den Rahmen mindestens eine Quertraverse und/oder mindestens eine Strebe eingesetzt, die mindestens ein Anzeigemittel und/oder mindestens einen Sensor aufweist. Das Anzeigemittel bzw. der Sensor sind Komponenten eines Leitsystems. Dieses Anzeigemittel ermöglicht es z.B. einem Kommissionierer zu signalisieren, auf welches Abteil er als nächstes zugreifen soll. Die Anzeigemittel können eine oder mehrere Leuchtdioden oder Lampen aufweisen und/oder auch mindestens ein Display, auf dem z.B. die Anzahl der zu entnehmenden oder abzulegenden Waren angezeigt wird. Die Anzeigemittel können einem bestimmten Abteil oder einer Gruppe von Abteilen zugeordnet sein. Alternativ können die Anzeigemittel ein Abteil anleuchten, z.B. durch einen schwenkbaren Lichtspot, wie er z.B. mit einem angelenkten und beleuchteten Spiegel erzeugt werden kann. Allgemeiner formuliert kann der Andockwagen Mittel zum Markieren mindestens eines Abteils eines angekuppelten Kommissionierwagens aufweisen, um einen Kommissionierer das nächste Abteil anzuzeigen, auf das er zugreifen soll.

Sensoren können der Überwachung des Zugriffs auf ein Lagerfach dienen, so dass die Steuerung eine Warenablage oder Warenentnahme in einem falschen Abteil erkennen und anzeigen kann. Solch ein Sensor kann z.B. mindestens eine Lichtschranke oder ein Gitter von Lichtschranken aufweisen. Der Sensor kann auch ein einfacher mir der Steuerung verbundener Taster zum Quittieren einer Handlung sein.

Besonders bevorzugt ist die Höhe der Querstrebe(n), die auch als Quertraverse bezeichnet wird, einstellbar. Dadurch kann sie einfach relativ zum einem Boden oder Zwischenboden des Kommissionierwagens positioniert werden, z.B. so dass sie in etwa vor dem Boden oder Zwischenboden angeordnet ist. Der Andockwagen kann bei einem Wechsel des Kommissionierwagens einfach an einen Kommissionierwagen mit einer anderen Abteilaufteilung angepasst werden. Dazu hat der Rahmen des Andockwagens bevorzugt an den vertikalen Stützen eine z.B. als Nut ausgebildete Führungsschiene auf die die Querstrebe aufgesetzt ist. Die Fixierung der Querstrebe kann dann durch einen Nutstein oder eine Klemmvorrichtung der Querstrebe erfolgen.

Wenn die Querstrebe mindestens zwei Kontakte aufweist, die am Rahmen angeordnete Schleifbahnen kontaktieren, dann kann ihre Höhe sehr einfach verstellt werden. Über die Schleifbahnen können die die Querstrebe und die daran angebrachten Komponenten des Leitsystems, insbesondere Anzeigemittel und/oder Sensoren zumindest mittelbar mit der Steuerung des Leitsystems verbunden werden.

Besonders bevorzugt hat der Andockwagen mindestens ein Erkennungsmittel zur automatischen Identifizierung eines angekuppelten Kommissionierwagens. Dadurch kann die Steuerung einen Wechsel des Kommissionierwagens verfolgen. Die Identifizierung kann, z.B. durch einen am Kommissionierwagen angebrachten Barcode erfolgen, der über einen dem Andockwagen zugeordneten Barcodescanner erfasst wird, z.B. als Bestätigung des Ankuppelns. Alternativ kann der Kommissionierwagen mindestens einen RFID-Transponder aufweisen, der von einem dem Andockwagen zugeordneten RFID-Reader ausgelesen wird. Die Verwendung von Barcode- oder RFID-Technik hat den Vorteil, dass die hierfür benötigten Komponenten oft auch zur Identifizierung der zu kommissionierenden Waren eingesetzt werden. In diesem Fall bedarf es somit außer einem entsprechenden Identifikationsmerkmal am Kommissionierwagen keiner zusätzlichen hardwaremäßigen Ausrüstung.

Bevorzugt hat der Andockwagen mindestens eine angetriebene Rolle, die vorzugsweise über ein Bedienelement am Andockwagen gesteuert wird. Dadurch kann selbst bei sehr schweren Kommissionierwägen auf jegliche elektrische Unterstützung verzichtet werden, weil ein Kommissionierer auch sehr schwere Kommissionierwägen mit dem Andockwagen bewegen kann.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnung exemplarisch beschrieben.
Figur 1 zeigt einen Andockwagen.
Figur 2 zeigt ein Detail eines Andockwagens.
Figur 3 zeigt in Detail eines Andockwagens.
Figur 4 zeigt ein Detail eines Andockwagens.

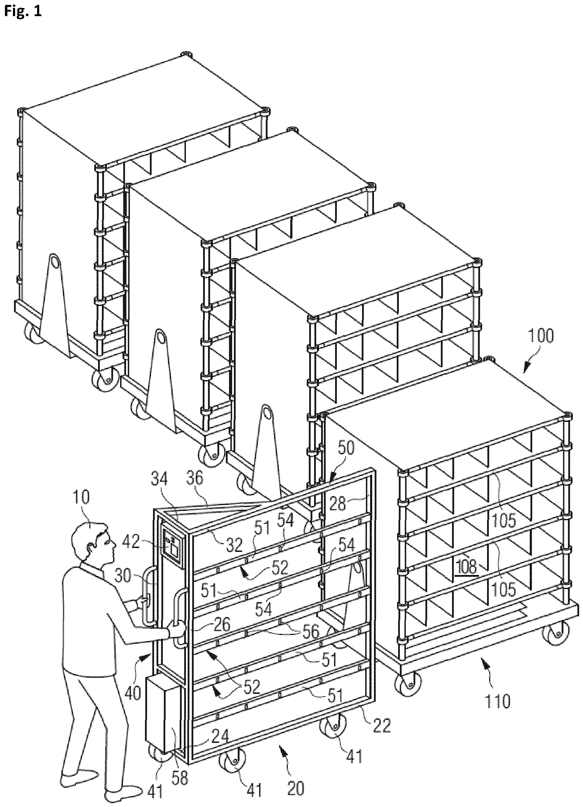

Der Andockwagen 20 in Fig. 1 hat eine L-förmige Bodengruppe aus Quer 24- und Längsträgern 22. An der Bodengruppe 22, 24 sind insgesamt 3 Rollen 41 befestigt. Die Aufstandsflächen der Rollen 40 bilden ein Dreieck, deshalb steht bzw. rollt der Andockwagen 20 ohne zu kippen. An den freien Enden der Quer 24- und Längsträger 22 ist je ein Pfosten 28, 30 befestigt. An den zusammenlaufenden Enden der Quer 24- und Längsträger ist ein weiterer Pfosten 26, der nachfolgend auch als Mittelpfosten 26 bezeichnet wird, befestigt. Zwischen den beiden Pfosten 26 und 28 sowie zwischen den beiden Pfosten 26 und 30 ist am oberen Ende der Pfosten 26 und 28 sowie 26 und 30 je ein Querbalken 32 bzw. 34. Die Pfosten 26, 28, der Längsträger 22 und der Querbalken 32 bilden wie auch die Pfosten 26, 30, Querträger 24 und Querbalken 34 je einen Rahmen 50 bzw. 40. Zur Aussteifung sind die beiden Querbalken 32, 34 durch eine Diagonalstrebe 36 miteneinander verbunden. Der Andockwagen hat somit zwei Rahmen 40, 50 von denen einer an der Schmalseite angeordnet ist und der andere an der Längsseite derart angeordnet ist, dass er eine Zugriffsseite eines angekuppelten Kommissionierwagens zumindest zum Teil überspannt.

Zwischen den Pfosten 26, 28 sind an Querstreben 51 Komponenten eines Leitsystems befestigt. Die beispielhaft dargestellten Komponenten sind Displays 52 z.B. zur Anzeige einer Anzahl, Signalleuchten 54 und Quittiertaster 56. Zur Verbindung der Komponenten mit einer Zentrale haben die Querstreben 51 drei Kontaktschienen, die von den auf an die Querstreben 51 aufgesetzten Komponenten kontaktiert werden. Dadurch lässt sich die horizontale Anordnung der Komponenten einfach durch Verschieben auf den Kontaktschienen verändern. Über die Kontaktschienen sind Komponenten in ein Bussystem zur Kommunikation mit der Zentrale des Leitsystems eingebunden.

Zur Montage der Querstreben 51 werden diese in Führungen an den Pfosten 26, 28 eingesetzt. Die Querstreben 51 sind in den Führungen vertikal verschiebbar. An dem Mittelpfosten 26 sind Kontaktschienen, die über Schleifkontakte mit den Kontaktschienen der Querstreben 51 verbunden sind. Die Kontaktschienen an dem Mittelpfosten 26 sind mit einer Steuerungseinheit 58 verbunden. Somit kann die Steuerungseinheit über die Kontaktschienen des Mittelpfostens 26 und den daran angeschlossenen Kontaktschienen der Querstreben 51 mit den an den Querstreben befestigten Komponenten des Leitsystems Daten austauschen. Die Steuerungseinheit 58 ist wiederum über eine bevorzugt bidirektionale Funkdatenstrecke mit einer Zentrale des Leitsystems verbunden. Die Zentrale des Leitsystems kann somit Signale der Komponenten an den Querstreben auslesen und zu diesen senden.

Der Andockwagen kann wie in Fig. 1 angedeutet an einen Kommissionierwagen angekuppelt werden. Dazu hat der Andockwagen eine zwischen dem Längs 22-und dem Querträger 24 bzw. zwischen den Rahmen 40, 50 aufgespannte Ausnehmung. Der Andockwagen wird so an den Kommissionierwagen heran geschoben, dass dieser zumindest zum Teil in der Ausnehmung ist. Nun genügt es den Andockwagen bevorzugt starr mit dem Kommissionierwagen zu verbinden. Dazu hat der Andockwagen Haltemagnete, die an der Innenseite der Ausnehmung angebracht sind. Die Haltemagnete haften an der Bodengruppe 102 des Kommissionierwagens. Zum Abkuppeln des Andockwagens haben die Haltemagnete je mindestens eine Spule, um das Magnetfeld eins Permanentmagneten des Haltemagnetes zumindest zum Teil zu kompensieren zu können. Dann lassen sich der Andockwagen 20 und der Kommissionierwagen 100 einfach horizontal auseinanderziehen.

Wenn der Andockwagen 20 an einen Kommissionierwagen 100 angekuppelt ist, dann ist der Rahmen 50 vor der Zugriffsseite 110 des Kommissionierwagens 100. Die Höhe der Querstreben 51 ist etwa auf der Höhe der Zwischenböden 105 des Kommissionierwagens. Um diese Höhe einzustellen haben die Pfosten 28, 28 als Nuten ausgebildete Führungsschienen, in denen die Querstreben 51 verschiebbar sind. Die an den Querstreben 51 befestigten Komponenten sind horizontal derart angeordnet, dass sie je einem Abteil wie 108 zugeordnet sind. Die Komponenten sitzen verschiebbar auf einer horizontalen Führungsschiene der Querstrebe 51, um die Position der Komponenten einfach an unterschiedliche Abteilbreiten anpassen zu können. Zwischen den Komponenten sitzt eine Abdeckung auf der Führungsschiene. Die Führungsschiene hat eine Ausnehmung, in die ein Kunststoffband mit drei offen liegenden elektrischen Leitern eingeklemmt ist (nicht dargestellt). Die Leiter dienen als Stromschienen, über die die Komponenten über Schleifkontakte, z.B. Kontaktfedern, mit elektrischer Energie versorgt werden und über einen Datenbus mit der Zentrale zumindest mittelbar verbunden sind. Das Leitsystem kann dem Kommissionierer 10 somit über die Komponenten Weisungen für bestimmte Abteile 108 des Kommissionierwagens geben oder Informationen von den Komponenten über Zugriffe auf bestimmte Abteile erhalten.

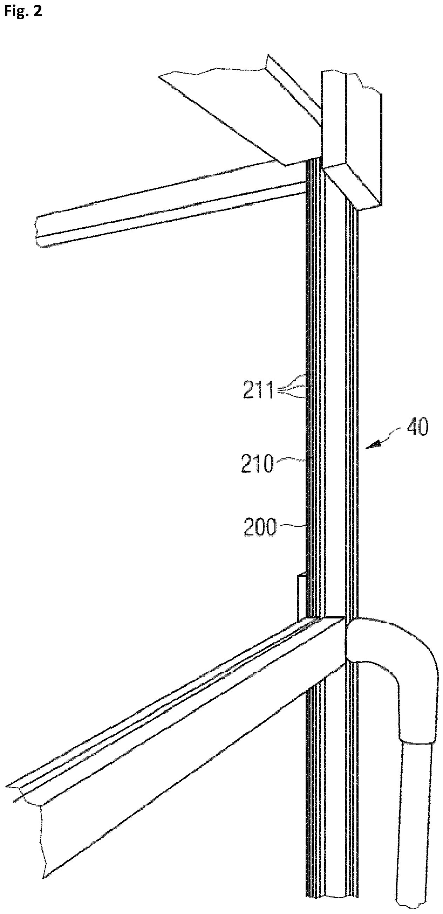

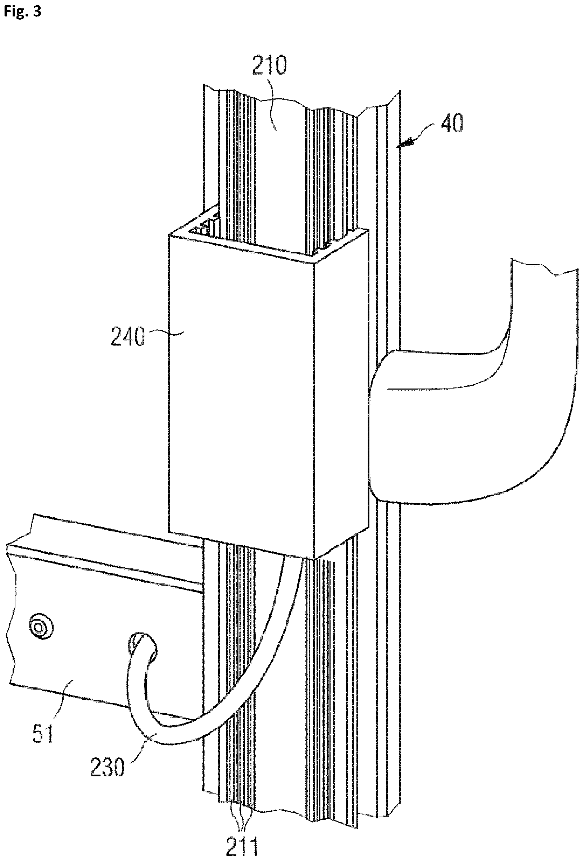

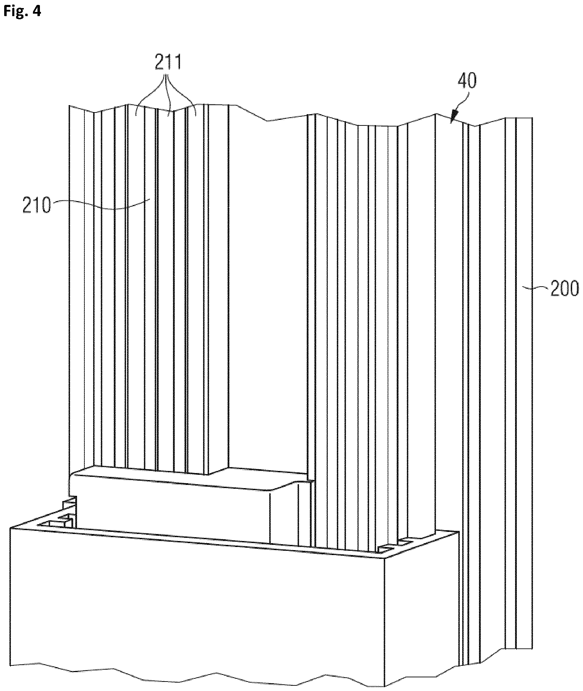

An der Innenseite des Rahmens 40 sitzt ein in Figur 2 angedeutetes Profil 200. Das Profil hat eine flache Rückseite mit der es an dem Pfosten 26 anliegt. Das Profil 200 hat ebenso wie die Querstreben eine Ausnehmung, in die ein Kunststoffband 210 mit beispielhaft drei offen liegenden elektrischen Leitern 211 eingeklemmt ist. Auf das Profil 200 sind in Fig. 3 dargestellte Abnehmer 240 aufgesetzt, an deren Innenseite drei Schleifkontakte sind, die je eine einen der elektrischen Leiter 211 kontaktieren. Die Schleifkontakte sind mit je einer Ader eines Kabels 230 verbunden, über welches eine Quertraverse 51 mit den elektrischen Leitern 211 verbunden sind. Fig. 4. zeigt stark vergrößert das Profil 200, das Kunststoffband mit den elektrischen Leitern 211. In gleicher Weise können die Steuerungseinheit 58 und ein Bildschirm 42 mit dem Datenbus verbunden werden

Wenn der Andockwagen an einen Kommissionierwagen gekuppelt wird, dann liest das Leitsystem einen RFID-Transponder an dem Kommissionierwagen 100 aus, d.h. es kann dem Kommissionierer Anweisungen für den angekuppelten Kommissionierwagen geben. Beispielsweise eine Anweisung wie "fahre den Kommissionierwagen als nächstes in Lagerreihe 5". Das kann z.B. über dem Bildschirm 42 dargestellt werden. Diese werden auf einem Display im Rahmen 40 dargestellt.

### Bezugszeichenliste

- 10: Kommissionierer
- 20: Andockwagen
- 22: Längsträger
- 24: Querträger
- 26: Mittelpfosten/Pfosten
- 28: Pfosten
- 30: Pfosten
- 32: Querbalken
- 34: Querbalken
- 36: Diagonalstrebe
- 40: Rahmen (quer)
- 41: Rolle
- 42: Bildschirm
- 50: Rahmen (längs)
- 51: Quertraverse / Querstrebe
- 52: Display
- 54: Signalleuchten
- 56: Quittiertaster
- 58: Steuerungseinheit
- 100: Kommissionierwagen
- 102: Bodengruppe
- 105: Zwischenboden
- 108: Abteil
- 110: Zugriffseite
- 200: Profil
- 210: Kunststoffband
- 211: elektrischer Leiter, offen liegend
- 230: Kabel
- 240: Abnehmer

## Patentansprüche

1. Andockwagen (20) mit mindestens einer elektronischen Komponente eines Leitsystems zur Unterstützung der Warenkommissionierung und Befestigungsmittel zum Kuppeln und anschließendem Entkuppeln des Andockwagens (20) mit bzw. von einem Kommissionierwagen (100),
**dadurch gekennzeichnet dass**,
die Höhe der Befestigungsmittel derart gewählt ist, dass zum Kuppeln und Entkuppeln des Andockwagens (20) eine horizontale Bewegung des Andockwagens (20) relativ zum Kommissionierwagen (100) und ggf. die Betätigung einer Ver- bzw. Entriegelung genügt.

2. Andockwagen (20) nach Anspruch 1
**dadurch gekennzeichnet dass**, der Andockwagen (20) einen stehenden Rahmen (40, 50) aufweist der mindestens ein Signalmittel (54) und/oder Sensor trägt und im angekuppelten Zustand mindestens einen Durchgriff auf Abteile (108) des Kommissionierwagens (100) hat.

3. Andockwagen (20) einem der vorstehenden Ansprüche
**dadurch gekennzeichnet, dass**
der Andockwagen (20) mindestens drei Rollen (41) aufweist.

4. Andockwagen (20) nach einem der vorstehenden Ansprüche,
**dadurch gekennzeichnet, dass**
der Andockwagen (20) eine Aussparung zur Aufnahme des Kommissionierwagens (100) aufweist.

5. Andockwagen (20) nach einem der vorstehenden Ansprüche,
**dadurch gekennzeichnet, dass**
der Andockwagen (20) eine Bodengruppe aus L- oder U-förmigen angeordneten liegenden Trägern (22, 24) aufweist, von denen mindestens einer Teil eines Rahmens ist, der bei angekuppeltem Andockwagen (20) vor einer Zugriffsseite des Kommissionierwagens (100) angeordnet ist.

6. Andockwagen (20) nach dem vorstehenden Anspruch,
**dadurch gekennzeichnet**, das
in den Rahmen mindestens eine Querstrebe (51) eingesetzt ist, die mindestens ein Anzeigemittel (54) und/oder mindestens einen Sensor aufweist.

7. Andockwagen (20) nach dem vorstehenden Anspruch
**dadurch gekennzeichnet dass**
die Höhe der Querstrebe (51) einstellbar ist.

8. Andockwagen (20) nach dem vorstehenden Anspruch,
**dadurch gekennzeichnet, dass**
die Querstrebe (51) mindestens zwei Kontakte aufweist, die am Rahmen angeordnete Schleifbahnens kontaktieren.

9. Andockwagen (20) nach einem der vorstehenden Ansprüche
**dadurch gekennzeichnet, dass**
der Andockwagen (20) mindestens ein Erkennungsmittel zur Identifizierung eines angekuppelten Kommissionierwagens (100) aufweist.

10. Andockwagen (20) nach einem der vorstehenden Ansprüche,
**dadurch gekennzeichnet, dass**
der Andockwagen (20) Mittel zum Markieren mindestens eines Abteils (108) eines angekuppelten Kommissionierwagens (100) aufweist.
